# EUROPÄISCHE PATENTSCHRIFT

(11) **EP 2 171 110 B1**
(45) Veröffentlichungstag und Bekanntmachung des Hinweises auf die Patenterteilung: **09.11.2016**
(21) Anmeldenummer: 08784694.5
(22) Anmeldetag: 10.07.2008
(51) Int. Cl.: C22C 1/10, G01N 15/00, G01N 3/62

(54) **VERFAHREN ZUR ERFASSUNG EINER WERKSTOFFSCHÄDIGUNG**
METHOD FOR DETECTING MATERIAL DAMAGE
PROCÉDÉ DE DÉTECTION D'UNE DÉTÉRIORATION D'UN MATÉRIAU

(30) Priorität: 19.07.2007 DE 102007033980
(43) Veröffentlichungstag der Anmeldung: 07.04.2010
(73) Patentinhaber: Airbus SAS, 31707 Blagnac Cedex (FR)
(72) Erfinder: HOFFMANN, Daniel, 85649 Neukirchstockach (DE); SCHOBERTH, Achim, 82024 Taufkirchen (DE)
(74) Vertreter: Ilgart, Jean-Christophe
(86) Internationale Anmeldenummer: PCT/EP2008/005652
(87) Internationale Veröffentlichungsnummer: WO 2009/010233

(56) Entgegenhaltungen:
- WO-A-90/05121
- WO-A-2005/005340
- DE-A1- 3 424 022
- US-A- 4 556 424
- US-A- 6 013 591
- US-A- 6 054 402
- US-B1- 6 361 888

## Beschreibung

Die vorliegende Erfindung betrifft ein Verfahren zur Erfassung einer Werkstoffschädigung.

Insbesondere für Bauteile, die bei deren Verwendung mehr oder weniger stark mechanisch beansprucht werden, ergibt sich in vielen Fällen das Problem einer irgendwann allmählich einsetzenden Rissbildung im betreffenden Werkstoff. Der Zeitpunkt, zu welchem diese Werkstoffschädigung beginnt, ist in der Praxis schwer vorhersehbar.

Aus diesem Grund werden in vielen Anwendungsbereichen technische Einrichtungen bzw. einzelne Komponenten davon einer abgeschätzt turnusmäßigen Wartung unterzogen. Ein Beispiel hierfür ist der Flugzeugbau. In diesem Bereich werden insbesondere Bauteile, deren Funktion sicherheitskritisch ist, oftmals nicht bedarfsgerecht sondern vorsorglich ausgetauscht.

Aus der DE 34 24 022 C2 ist die Herstellung eines als Werkstoff nutzbaren Verbundkörpers aus einem im wesentlichen glasartigen Metall als Matrixlegierung und mindestens einer Art von Sekundärphasen-Teilchen bekannt, die in der Matrixlegierung gleichmäßig dispergiert sind. Als Matrixlegierung wird hierbei bevorzugt eine Kobalt-, Nickel- oder Eisen-Basis-Legierung gewählt. Hinsichtlich der Sekundärphasen-Teilchen werden beispielsweise Kohlenstoff, Nitrid, Oxid, Borid, Silikat und Metall genannt. Der beschriebene Werkstoff soll insbesondere als hochverschleißfester Magnetwerkstoff, etwa zur Herstellung von Magnetköpfen geeignet sein.

Aus der US 4,007,062 ist ein Werkstoff bekannt, der aus einer Aluminiummatrix mit darin eingebetteten keramischen Teilchen besteht. Ferner sind in dieser Veröffentlichung verschiedende Verfahren zur Herstellung des Werkstoffes beschrieben.

Aus der AT 001 239 U1 ist ein Verfahren zur Herstellung eines Verbundwerkstoffes bekannt, der aus einer Matrixkomponente aus einem oder mehreren Metallen sowie aus einer festigkeitssteigernden Komponente besteht. Bei der Herstellung des Wekstoffes werden diese Komponenten durch Druck- und/oder Temperatureinwirkung unlösbar miteinander verbunden. Als festigkeitssteigernde Komponente kommen insbesondere eine oder mehrere Verbindungen in Betracht, ausgewählt aus der Gruppe Karbide, Boride, Nitride, Oxide der Metalle der Gruppe IVB - VIB, Silizium, Bor, Aluminium und Seltene Erden.

Es ist eine Aufgabe der vorliegenden Erfindung, eine eher bedarfsgerechte Reparatur bzw. Wartung im Hinblick auf Bauteile zu ermöglichen, die bei deren Verwendung einer schwer einschätzbaren Rissbildung im betreffenden Werkstoff unterliegen.

Diese Aufgabe wird gemäß der Erfindung gelöst durch ein Verfahren zur Erfassung einer Werkstoffschädigung nach Anspruch 1. Die abhängigen Ansprüche betreffen vorteilhafte Weiterbildungen der Erfindung.

Nachfolgend sollen zunächst für die Durchführung der Erfindung geeignete Werkstoffe und Verfahren zu deren Herstellung beschrieben werden, bevor detaillierter auf das erfindungsgemäße Verfahren zur Erfassung einer Werkstoffschädigung eingegangen wird.

Der zur Durchführung der Erfindung vorgesehene Werkstoff umfasst eine metallische Matrix und darin eingebettete keramische Partikel, wobei eine volumenvergrößernde Phasenumwandlung der Partikel durch einen von der metallischen Matrix auf die Partikel ausgeübten Druck unterdrückt ist.

Bei einem Bauteil aus einem derartigen Werkstoff lässt sich mit Hilfe des erfindungsgemäßen Verfahrens vergleichsweise einfach feststellen, wo und wie stark es mechanisch geschädigt wurde. Bei einer beginnenden Rissbildung verringert sich der von der metallischen Matrix auf diejenigen Partikel ausgeübte Druck mehr oder weniger dramatisch, welche sich in unmittelbarer Nähe einer Rissfläche befinden bzw. an eine solche Rissfläche angrenzen. Diese Druckverringerung im Bereich jedes Risses im Werkstoff initiiert die zuvor unterdrückte Phasenumwandlung, so dass durch eine Detektion von volumenvergrößert phasenumgewandelten Partikeln Risse frühzeitig erkannt werden können. Dies wiederum ermöglicht eine bedarfsgerechtere Reparatur - bzw. Wartungsmaßnahme für das betreffende Bauteil.

In einer für die Erfindung vorteilhaften Weiterbildung des Werkstoffes ist das Material der Partikel derart gewählt, dass bei einer Rissbildung im Bereich der Partikel der an sich bekannte Effekt einer "Rissschließung" bzw. "Partikelverstärkung" resultiert ("transformation toughening").

In einer Ausführungsform ist vorgesehen, dass die Matrix ein Stahl ist.

In einer anderen Ausführungsform ist vorgesehen, dass die Matrix eine Leichtmetalllegierung, insbesondere eine Aluminiumlegierung, ist.

Derartige Matrixmaterialien eignen sich insbesondere z. B. zur Herstellung von Strukturbauteilen für Fahrzeuge, insbesondere Luftfahrzeuge. Beispielsweise für den Bereich des Flugzeugbaus kann vorteilhaft auf an sich bekannte Aluminumlegierungen der Klassifizierung "7xxx" oder auch "6xxx" als Matrixmaterial zurückgegriffen werden.

Ein unter Verwendung des erfindungsgemäßen Verfahrens zu untersuchendes Bauteil muß keineswegs vollständig aus dem oben beschriebenen Werkstoff gebildet sein. Vielmehr ist es auch möglich, diesen Werkstoff als eine Komponente eines Werkstoffverbundes vorzusehen, beispielsweise als eine Oberflächenbeschichtung an einem Bauteil.

Auch hinsichtlich der Wahl des Materials für die keramischen Partikel kann auf an sich bekannte Keramikmaterialien zurückgegriffen werden. In einer Ausführungsform ist beispielsweise vorgesehen, dass die Partikel aus Zirkoniumdioxid gebildet sind, bei denen die volumenvergrößernde Phasenumwandlung von der tetragonalen Phase in die monokline Phase unterdrückt ist.

Dies ist selbstverständlich lediglich beispielhaft zu verstehen. In der Praxis können auch andere Keramikmaterialien und andere Phasenumwandlungen, bevorzugt Umwandlungen der Kristallstruktur der betreffenden Keramik zwischen zwei unterschiedlichen Kristallsystemen, vorgesehen sein.

Zusammenfassend besteht die Grundidee bei dem mittels der Erfindung zu untersuchenden Werkstoff darin, besondere Partikel im Werkstoff zu integrieren, welche eine einfach detektierbare Eigenschaft (Phase) ändern, wenn eine mechanische Schädigung wie ein Riss den Bereich dieser Partikel passiert. Die Partikel bilden gewissermaßen "integrierte Detektoren", welche auf die im Rissbereich stattfindende mechanische Druckverringerung ansprechen. Insbesondere eine Veränderung der kristallographischen Struktur der Partikel lässt sich hierbei besonders einfach erfassen, um gegebenenfalls aufgetretene Werkstoffschädigungen frühzeitig nachweisen zu können.

Ein vorteilhaftes Verfahren zur Herstellung eines für die Erfindung geeigneten Werkstoffes umfasst die Schritte:
- Einbringen von keramischen Partikeln in eine metallische Matrix bei einer erhöhten Temperatur, bei welcher die Partikel in einer Phase vergleichsweise kleinen Volumens vorliegen, und
- Abkühlen der metallischen Matrix mit den darin eingebetteten keramischen Partikeln derart, dass eine volumenvergrößernde Phasenumwandlung der Partikel durch einen von der Matrix auf die Partikel ausgeübten Druck unterdrückt wird.

Mit einem solchen Herstellungsverfahren lassen sich Werkstoffe der oben beschriebenden Art in einfacher Weise herstellen. Die oben beschriebenen besonderen Ausführungsformen und Ausgestaltungen des Werkstoffes können in analoger Weise durch entsprechende besondere Verfahrensmerkmale realisiert werden.

In einer Ausführungsform des Herstellungsverfahrens ist vorgesehen, dass das Einbringen der Partikel in die Matrix bei einer Temperatur erfolgt, die nahe dem Schmelzpunkt der Matrix liegt oder sogar höher als dieser Schmelzpunkt ist.

In einer spezielleren vorteilhaften Ausführungsform ist vorgesehen, dass das Einbringen der Partikel in die Matrix während eines Extrusionsprozesses erfolgt. Auf diese Weise lassen sich z. B. Aluminiumprofile von erfindungsgemäßer Art fertigen. Alternativ kann ein HIP-Prozess ggf. gefolgt von einem Extrusionsprozess verwendet werden, oder aber ein anderer geeigneter Konsolidierungsprozess. Vor und/oder während des Abkühlens der metallischen Matrix mit den darin eingebetteten keramischen Partikeln kann ganz allgemein vorteilhaft ein Umformen des Werkstoffes erfolgen, beispielsweise zur Realisierung einer gewünschten Endkontur eines Bauteils bzw. Halbzeugs.

Mit dem beschriebenen Herstellungsverfahren können gebrauchsfertige Bauteile bzw. Bauteilkomponenten (z. B. für Verbundbauteile) oder auch Halbzeuge wie z. B. Werkstoffbleche oder Werkstoffprofile gefertigt werden.

Das erfindungsgemäße Verfahren zu Erfassung einer Werkstoffschädigung an einem Werkstoff der oben bereits beschriebenen Art bzw. einem Werkstoff, der entsprechend dem vorstehenden beschriebenen Verfahren hergestellt wurde, umfasst eine Bestimmung einer Größe, insbesondere einer physikalischen Messgröße, die repräsentativ für den Anteil der volumenvergrößerten Phase der Partikel im Werkstoff ist.

Für eine solche Schädigungserfassung sind insbesondere Messmethoden auf Basis einer Strahlung bzw. auf Basis von Wellen interessant, welche mehr oder weniger ungehindert durch das Matrixmaterial hindurchgehen, jedoch bevorzugt stark mit den eingebetteten Partikeln wechselwirken. Im Falle einer vergleichsweise geringen Eindringtiefe der verwendeten Strahlung bzw. Wellen verbleibt die vorteilhafte Möglichkeit, Werkstoffschädigungen zumindest in oberflächennahen Bereichen des Bauteils bzw. Werkstoffes nachweisen zu können.

Die Bestimmung der Messgröße kann z. B. unter Verwendung von Schallwellen, insbesondere Ultraschallwellen, erfolgen. In einer anderen Ausführungsform ist vorgesehen, dass die Bestimmung der Messgröße mittels elektromagnetischer Strahlung wie z. B. Röntgenstrahlung oder Terahertz-Strahlung erfolgt. Insbesondere für den Fall, dass die Phasenumwandlung der Partikel eine kristallographische Phasenumwandlung ist, ergibt sich ein besonderer Vorteil, wenn die Wellenlänge der verwendeten Strahlung (auch: z. B. Neutronenstrahlung etc.) in derselben Größenordnung wie die typischen Gitterabstände der beteiligten kristallographischen Strukturen liegt. In diesem Fall kann die Bestimmung der Größe auf Interferenzeffekten beruhen bzw. durch solche Effekte in der Messgenauigkeit verbessert werden. Ein Beispiel einer derartigen, auf Interferenz beruhenden Messmethode ist die Röntgenbeugung ("XRD"), welche im Rahmen der Erfindung vorteilhaft eingesetzt werden kann. Selbstverständlich ist die Nutzung von Beugungseffekten im Rahmen der erfindungsgemäßen Schädigungserfassung keineswegs auf elektromagnetische Strahlung, insbesondere Röntgenstrahlung eingeschränkt. Vielmehr kann diesbezüglich vorteilhaft auch auf andere, an sich bekannte Strahlungsarten zurückgegriffen werden.

In einer bevorzugten Ausführungsform erfolgt die Bestimmung der Messgröße ortsaufgelöst. Damit lässt sich vorteilhaft nicht nur eine Schädigung des Werkstoffes als solche nachweisen, sondern es können auch Aussagen über deren räumliche Verteilung bzw. die Orte einzelner Schädigungen gemacht werden.

In einer Ausführungsform ist vorgesehen, dass die Messgröße repräsentativ für einen Volumenanteil der volumenvergrößerten Phase ist (z. B. absolutes Volumen oder relatives Volumen bezogen z. B. auf das Gesamtvolumen des untersuchten Werkstoffes).

Alternativ oder zusätzlich ist es von besonderem Vorteil, wenn die Messgröße repräsentativ für den Anteil der volumenvergrößerten Phase bezogen auf den Anteil der volumenverkleinerten Phase ist. Wenn nämlich eine solche vergleichende Messung zwischen den Anteilen der Partikel im Ausgangszustand und im umgewandelten Zustand durchgeführt wird, so benötigt man keine externe Referenz zum Vergleich bzw. eine Kalibrierung der Messung. Vielmehr ist die Messung einer gewissermaßen auf eine interne Referenz des Werkstoffes bezogenen Messgröße mit größerer Genauigkeit auch ohne vorherige Vergleichsmessung bzw. eine Kalibrierung möglich. Außerdem ist ein derart gemessenes Größenverhältnis relativ stabil gegenüber Schwankungen der Ausgangspartikelkonzentration im Werkstoff und der Messbedingungen.

Mit der erfindungsgemäßen Schädigungserfassung ist somit eine quantitative und gegebenenfalls auch lokalisierte Bewertung von Materialschädigungen möglich.

Das Verfahren kann insbesondere an einem aus dem Werkstoff gebildeten Strukturbauteil einer technischen Einrichtung sehr wertvoll sein, um z. B. turnusmäßige Wartungen besser zu planen bzw. durch bedarfsbezogene Wartungen zu ersetzen (z. B. gezielt bedarfsgerechte Reparaturen von Teilstücken).

Die Erfindung wird nachfolgend anhand eines Ausführungsbeispiels mit Bezug auf die beigefügten Zeichnungen weiter beschrieben. In denen zeigt:
- Fig. 1: eine schematische Darstellung eines Werkstoffes in einem Ausgangszustand, und
- Fig. 2: eine der Fig. 1 entsprechende Darstellung nach einer Rissbildung im Werkstoff.

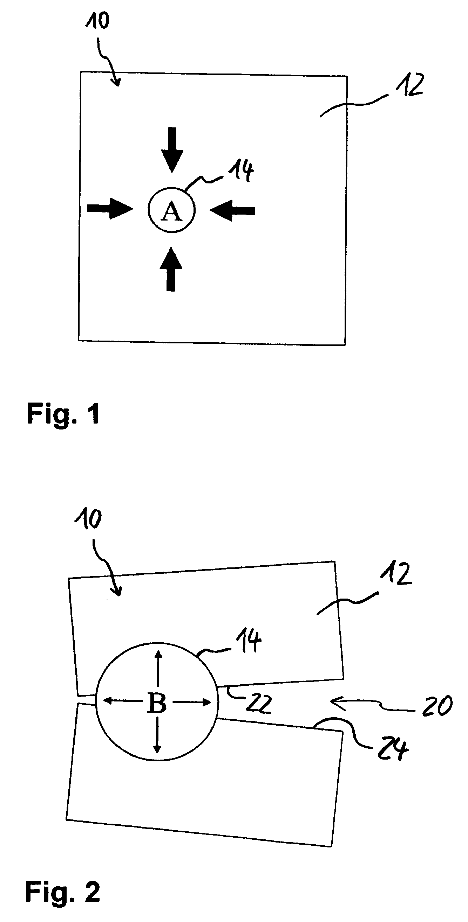

Fig. 1 veranschaulicht einen Werkstoff 10, umfassend eine metallische Matrix 12 und darin eingebettete keramische Partikel, von denen der Einfachheit halber in Fig. 1 nur eines dargestellt und mit 14 bezeichnet ist.

Tatsächlich sind in der metallischen Matrix 12 (z. B. eine Aluminiumlegierung) viele Partikel 14 fein verteilt angeordnet.

Aufgrund einer entsprechenden Herstellungsmethode des Werkstoffes 10 liegen die Partikel 14 in der Matrix 12 in einer bestimmten (hier: kristallographischen) Phase vor, die in der Figur mit A gekennzeichnet ist.

Die Pfeile in Fig.1 symbolisieren einen mechanischen Druck, der von dem Material der Matrix 12 auf die Partikel 14 ausgeübt wird und die Phase A stabilisiert. Bei der Verwendungstemperatur des Werkstoffes 10 bzw. eines damit gebildeten Bauteils würden die Partikel 14 normalerweise eine volumenvergrößernde Phasenumwandlung vollziehen. Diese Phasenumwandlung wird im dargestellten Zustand jedoch durch den auf die Partikel 14 ausgeübten mechanischen Druck unterdrückt.

Wenn nun der Werkstoff eine gewisse Zeit in Verwendung war und entsprechenden Belastungen ausgesetzt war, so besteht irgendwann die Gefahr einer Rissbildung im Werkstoff 10.

Fig. 2 veranschaulicht einen durch eine solche Rissbildung geschädigten Werkstoffzustand. In der Figur dargestellt ist ein durch den Werkstoff 10 hindurch verlaufender Riss 20, der durch entsprechende Rissflächen 22 und 24 begrenzt wird.

Wenn dieser Riss 20 wie dargestellt das Partikel 14 passiert oder auch ein solches Partikel 14 sich in unmittelbarer Nähe einer der Rissflächen 22 und 24 befindet, so wird die zuvor unterdrückte Phasenumwandlung des Partikels 14 durch die Druckverringerung im Bereich des Risses 20 ausgelöst. Sämtliche Partikel 14, die sich also im Bereich des Risses 20 befinden, wie das dargestellte Partikel 14, werden in eine volumenvergrößerte Phase umgewandelt, was in Fig. 2 durch Pfeile und die mit B gekennzeichnete Phase symbolisiert ist.

Die in Fig. 2 dargestellte Schädigung des Werkstoffes 10 durch den Riss 20 kann durch ein geeignetes physikalisches Messverfahren erfasst werden, bei welchem eine Größe bestimmt wird, die repräsentativ für den Anteil der volumenvergrößerten Phase B der Partikel 14 im Werkstoff 10 ist. Als Messmethode kommt z. B. Röntgenbeugung, insbesondere z. B. unter streifendem Einfall ("GAXRD") in Betracht. Alternativ oder zusätzlich kann zur Detektion des Vorhandenseins der Phase B auch z. B. Terahertz-Strahlung verwendet werden, wie sie z. B. in einfacher Weise durch Differenzfrequenzmischung von Lasern mit Wellenlängen im Infrarotbereich erzeugt werden kann.

Je mehr von dem Werkstoff 10 durch Risse geschädigt ist, desto größer wird der Anteil der Phase B im Vergleich zum Anteil der Phase A im Werkstoff. Daher kann bei der Erfassung der Werkstoffschädigung z. B. als vorteilhafte Messgröße ein Phasenverhältnis (Anteil von Phase B / Anteil von Phase A) bestimmt werden, um ein quantitatives Maß für die Schädigung zu erhalten.

Da sich ein absoluter oder relativer Anteil der Phase B räumlich nur dort ändert, wo tatsächlich eine Materialschädigung vorhanden ist, kann durch eine ortsaufgelöste Messung zusätzlich eine räumlich aufgelöste Erfassung von Rissen im Werkstoff 10 erfolgen.

In der Praxis kann ein solches Erfassungsverfahren für Werkstoffschädigungen beispielsweise an einem aus dem Werkstoff 10 gebildeten Strukturbauteil im Bereich der Luft- und Raumfahrttechnik sehr nützlich sein, um Werkstoffschädigungen z. B. mittels Röntgenbeugung berührungslos für unterschiedliche Tiefen zu erfassen.

## Patentansprüche

1. Verfahren zur Erfassung einer Werkstoffschädigung an einem Werkstoff, der eine metallische Matrix (12) und darin eingebettete keramische Partikel (14) umfasst, wobei eine volumenvergrößernde Phasenumwandlung der Partikel (14) durch einen von der metallischen Matrix (12) auf die Partikel ausgeübten Druck unterdrückt ist, wobei das Verfahren eine Bestimmung einer Messgröße umfasst, die repräsentativ für den Anteil der volumenvergrößerten Phase (B) der Partikel (14) im Werkstoff (10) ist.

2. Verfahren nach Anspruch 1, wobei die Bestimmung der Messgröße mittels elektromagnetischer Strahlung erfolgt.

3. Verfahren nach einem der vorangehenden Ansprüche, wobei die Bestimmung der Messgröße ortsaufgelöst erfolgt.

4. Verfahren nach einem der vorangehenden Ansprüche, wobei die Messgröße repräsentativ für einen Volumenanteil der volumenvergrößerten Phase (B) ist.

5. Verfahren nach einem der vorangehenden Ansprüche, wobei die Messgröße repräsentativ für den Anteil der volumenvergrößerten Phase (B) bezogen auf den Anteil der volumenverkleinerten Phase (A) ist.

6. Verfahren nach einem der vorangehenden Ansprüche, durchgeführt an einem aus dem Werkstoff (10) gebildeten Strukturbauteil einer technischen Einrichtung.

7. Verfahren nach einem der vorangehenden Ansprüche, durchgeführt an einem Werkstoff, dessen Matrix (12) ein Stahl ist.

8. Verfahren nach einem der vorangehenden Ansprüche, durchgeführt an einem Werkstoff, dessen Matrix (12) eine Leichtmetalllegierung, insbesondere eine Aluminiumlegierung, ist.

9. Verfahren nach einem der vorangehenden Ansprüche, durchgeführt an einem Werkstoff, dessen Partikel (14) aus Zirkoniumdioxid gebildet sind, bei denen die volumenvergrößernde Phasenumwandlung von der tetragonalen Phase (A) in die monokline (B) Phase unterdrückt ist.

## Claims

1. Process for registering damage to a material comprising a metallic matrix (12) with ceramic particles (14) embedded in it, in which a volume-increasing phase change of the particles (14) is inhibited by pressure exerted on the particles by the metallic matrix (12), and in which a measurement representing the proportion of the volume-increased phase (B) of the particles (14) in the material (10) is made.

2. Process according to claim 1, in which the measurement is made by means of electromagnetic radiation.

3. Process according to one of the previous claims, in which the measurement is made by spatial resolution.

4. Process according to one of the previous claims, in which the measurement is representative of a volumetric proportion of the volume-increased phase (B).

5. Process according to one of the previous claims, in which the measurement is representative of the proportion of the volume-increased phase (B) relative to the proportion of the volume-reduced phase (A).

6. Process according to one of the previous claims, carried out on a structural component of a technical installation made of the material (10).

7. Process according to one of the previous claims, carried out on a material whose matrix (12) is a steel.

8. Process according to one of the previous claims, carried out on a material whose matrix (12) is a light-metal alloy, especially an aluminium alloy.

9. Process according to one of the previous claims, carried out on a material whose particles (14) are formed from zirconium dioxide, in which the volume-increasing phase change from the tetragonal phase (A) to the monoclinic phase (B) is inhibited.

## Revendications

1. Procédé de détection d'une détérioration d'un matériau, qui comprend une matrice métallique (12) des particules de céramiques (14) qui y sont enrobées, dans lequel un changement de phase des particules (14) accroissant leur volume est contrarié par une pression exercée par la matrice métallique (12) sur les particules, le procédé comprenant la détermination d'une grandeur mesurée, et représentative de la quantité des particules (14) à la phase à volume accru (B) dans le matériau (10).

2. Procédé selon la revendication 1, dans lequel la détermination de la grandeur mesurée s'effectue par un rayonnement électromagnétique.

3. Procédé selon l'une des revendications précédentes, dans lequel la détermination de la grandeur mesurée s'effectue par résolution spatiale.

4. Procédé selon l'une des revendications précédentes, dans lequel la grandeur mesurée est représentative d'une quantité volumique de la phase à volume accru (B).

5. Procédé selon l'une des revendications précédentes, où la grandeur mesurée est représentative de la quantité de la phase à volume accru (B) rapportée à la quantité de la phase à volume réduit (A).

6. Procédé selon l'une des revendications précédentes, accompli sur une pièce structurale construite dans le matériau (10) d'un dispositif technique.

7. Procédé selon l'une des revendications précédentes, accompli sur un matériau dont la matrice (12) est un acier.

8. Procédé selon l'une des revendications précédentes, accompli sur un matériau dont la matrice (12) est un alliage de métal léger, en particulier un alliage d'aluminium.

9. Procédé selon l'une des revendications précédentes, accompli sur un matériau dont les particules (14) sont en dioxyde de zirconium, pour lesquelles le changement de phase avec accroissement de volume de la phase tétragonale à la phase monoclinique (B) est contrarié.
